# EUROPEAN PATENT APPLICATION

(11) **EP 3 718 815 A1**
(43) Date of publication of application: **07.10.2020**
(21) Application number: 18883265.3
(22) Date of filing: 23.10.2018
(51) Int. Cl.: B60M 3/06, H02J 3/38

(54) **ELECTRIC POWER MANAGEMENT SYSTEM**

(30) Priority: 29.11.2017 JP 2017228536
(71) Applicant: Hitachi, Ltd., Tokyo 100-8280 (JP)
(72) Inventor: TAKAHASHI, Hirofumi, Tokyo 100-8280 (JP); ANDOU, Shinsuke, Tokyo 100-8280 (JP); NAKAHARA, Mizuki, Tokyo 100-8280 (JP); KAWAGUCHI, Yuki, Tokyo 100-8280 (JP); MABUCHI, Yuuichi, Tokyo 100-8280 (JP); KANOUDA, Akihiko, Tokyo 100-8280 (JP); NEMOTO, Ryo, Tokyo 100-8280 (JP); KIKUCHI, Akira, Tokyo 100-8280 (JP); ITO, Tomomichi, Tokyo 100-8280 (JP)
(74) Representative: Strehl Schübel-Hopf & Partner
(86) International application number: PCT/JP2018/039329
(87) International publication number: WO 2019/107017

(57) **Abstract**

An object is to provide a reliable power management system. In order to solve the above problems, a power management system according to the invention includes a power supply unit that is arranged in a power supply facility, a first electric wire that is used to supply power to an overhead wire in contact with an electric vehicle, a first power conversion unit that can supply power supplied from the power supply unit to the first electric wire, a load that is disposed in a power consumption facility, a second electric wire that is used to supply power to the load, a calculation unit that calculates power consumption of the load, a second power conversion unit that connects the first electric wire and the power consumption facility and can supply power in one or both directions, and a control unit that controls the first power conversion unit based on the power consumption of the load calculated by the calculation unit and an available power supply amount of the power supply unit, and controls power supply to the first electric wire.

## Description

### Technical Field

The present invention relates to a power management system.

### Background Art

In recent years, renewable energy power generation devices utilizing sunlight or wind power are dispersedly installed have been increasing. In addition, batteries such as lithium-ion batteries, lead batteries, NAS batteries, and redox flow batteries, and power storage devices consisting of capacitors such as electric double-layer capacitors and lithium-ion capacitors are installed in customers such as homes, buildings, factories, etc. There has been proposed a method for efficiently using power. These power generation devices and power storage devices are usually connected to a commercial power system via a power conversion device, and power is sold or purchased.

In such a situation, with the extension of the introduction of renewable energy, stabilization against voltage fluctuations and frequency fluctuations in the power system has become a challenge. Energy storage systems have been introduced for the purpose of suppressing output fluctuations, peak cutting, and emergency power sources of renewable energy generation. As an energy storage system, for example, a method of adjusting power consumption by charging and discharging a power storage device is known.

In addition, in the railway field, a power system for effectively utilizing regenerative power generated at the time of deceleration of a railway vehicle or the like is being studied. PTL 1 discloses an electric railway power system in which regenerative power generated at the time of railway deceleration is charged into a storage battery connected to a feeder circuit for effective use of the regenerative power.

### Citation List

### Patent Literature

PTL 1: JP 2011-56996 A

### Summary of Invention

### Technical Problem

In the conventional energy storage system, since the power storage device is connected to the renewable energy power generation only through the commercial power system, the operation rate is low, and it is difficult to effectively use the power storage device.

In addition, the railway power system disclosed in PTL 1 is a system in which a railway company installs a power storage device of a required capacity and output, connects the power storage device to a feeder circuit, and operates the power storage device. Therefore, the energy storage system is used only for the purpose of effective use of regenerative power. In a case where the customer's energy storage system is connected to only one power system, there is a possibility that power cannot be provided when the power system is out of power. In addition, it is expected that the operation rate of the existing energy storage system will be further improved.

Therefore, an object of the invention is to provide a highly reliable power management system.

### Solution to Problem

In order to solve the above problems, a power management system according to the invention includes a power supply unit that is arranged in a power supply facility, a first electric wire that is used to supply power to an overhead wire in contact with an electric vehicle, a first power conversion unit that can supply power supplied from the power supply unit to the first electric wire, a load that is disposed in a power consumption facility, a second electric wire that is used to supply power to the load, a calculation unit that calculates power consumption of the load, a second power conversion unit that connects the first electric wire and the power consumption facility and can supply power in one or both directions, and a control unit that controls the first power conversion unit based on the power consumption of the load calculated by the calculation unit and an available power supply amount of the power supply unit, and controls power supply to the first electric wire.

### Advantageous Effects of Invention

According to the invention, a highly reliable power management system can be provided.

### Brief Description of Drawings

[FIG. 1] FIG. 1 is a configuration diagram of a power management system according to a first embodiment.
[FIG. 2] FIG. 2 is a configuration diagram of a power management system according to a second embodiment.
[FIG. 3] FIG. 3 is a configuration diagram of a power management system according to a third embodiment.
[FIG. 4] FIG. 4 is a configuration diagram of a power management system according to a fourth embodiment.
[FIG. 5] FIG. 5 is a configuration diagram of a power management system according to a fifth embodiment.
[FIG. 6] FIG. 6 is a flowchart illustrating a control example according to the fifth embodiment.
[FIG. 7] FIG. 7 is a configuration diagram of a power management system according to a sixth embodiment.

### Description of Embodiments

In the configuration of the conventional power management system, it is difficult to configure that, in a case where the photovoltaic power exceeds the capacity of the commercial power system, the power storage device connected via the commercial power system temporarily stores the photovoltaic power, and later shares the photovoltaic power with the commercial power system. In addition, in the configuration of the conventional power transmission network, it is difficult to directly transmit surplus photovoltaic power to the power consumer.

Therefore, the inventors have found out a power management system that can exchange power using a power supply path power generation device, a power storage device, and an existing power line for power demand. The power management system according to one embodiment of the invention can construct a power supply network having a high reliability in which, even in a case where power consumption of a load increases, a mechanism such as a breaker is operated by power supply from a power supply unit and power consumption is not hindered. In addition, even in a case where the power supply from the commercial power system to the load is interrupted due to a power failure or the like, the power supply can be received.

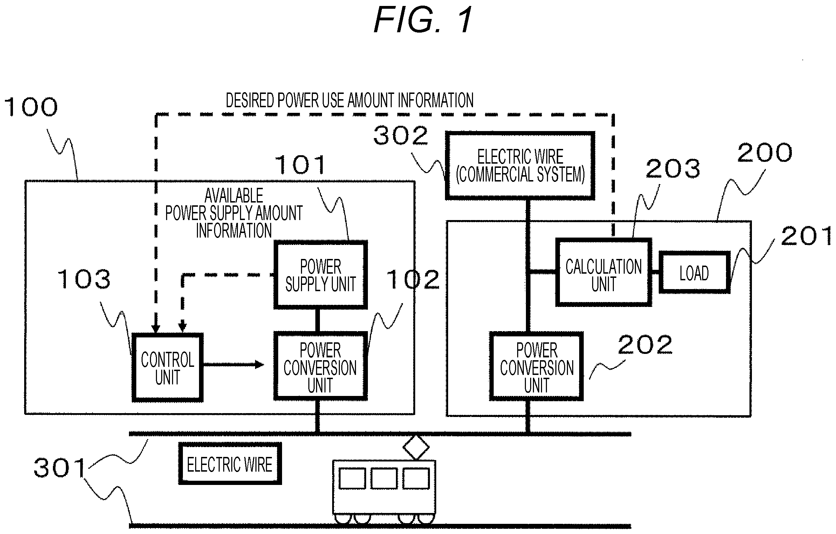

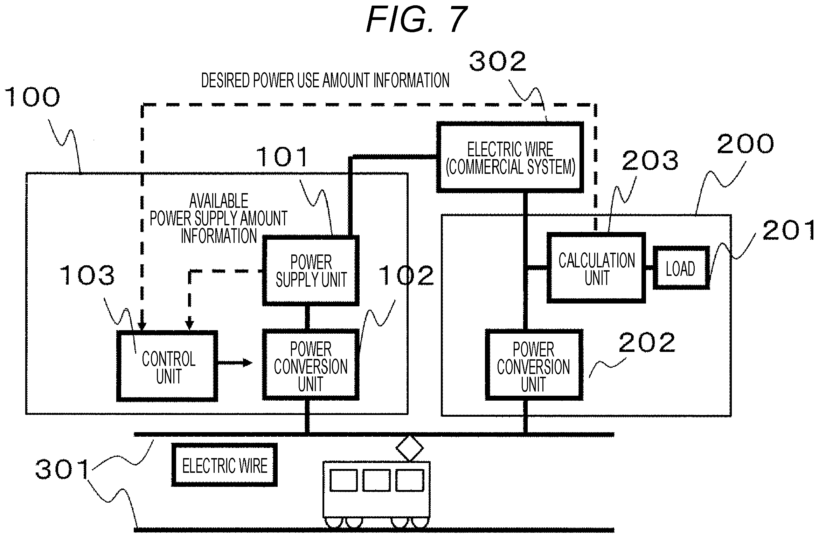

Hereinafter, an embodiment of the invention will be described with reference to FIGS. 1 to 7.

### [First Embodiment]

FIG. 1 is a configuration diagram of a power management system according to a first embodiment. The power management system
includes a power supply facility 100, a power consumption facility 200, a first electric wire 301 for transmitting power from the power supply facility 100 to the power consumption facility 200, and a second electric wire 302 capable of supplying power to the power consumption facility 200.

The first electric wire 301 is an electric wire (feeder line) that supplies power to an overhead wire that is in contact with the electric vehicle. Power is supplied from the second electric wire and/or a power generation facility to the electric vehicle at a portion (not illustrated).

The second electric wire 302 may be either a system using a transmission and distribution network operated by a so-called power company (power supply company) or a dedicated system prepared by a company that transmits and distributes power to a region.

In the first embodiment, an example will be described in which the power supply facility and the power consumption facility are individual sites.

The power supply facility 100 includes a power supply unit 101, a first power conversion unit 102 that can supply power supplied from the power supply unit 101 to the first electric wire, and a control unit 103 that controls the first power conversion unit 102. The power consumption facility 200 includes a load 201, a second power conversion unit 202 which connects the first electric wire 301 and the power consumption facility 200, and is capable of supplying power in one or both directions, and a calculation unit 203 which calculates the power consumption of the load 201.

The power supply unit 101 includes a device that can supply power, and an output device that outputs information on the amount of power that can be supplied. The device that can supply power is not particularly limited as long as it can supply power. Specifically, any of renewable energy power generation systems such as sunlight and wind power, power storage systems, and power generation devices can be used. In addition, the second electric wire 302 may also serve as the power supply facility 100.

The first power conversion unit 102 appropriately supplies the power supplied from the power supply unit 101 to the first electric wire 301. The second power conversion unit 202 converts the power supplied from the first electric wire 301 into a state to be used by the load. In addition, the power supplied from the second electric wire 302 is converted into a state to be usable by the first electric wire 301. Here, the power supplied by the power supply unit 101 and the power conversion unit may be DC, single-phase AC, or three-phase AC, and the voltage and frequency can be set according to the facility.

The load 201 includes various devices that consume power, such as an air-conditioning facility and a lighting facility included in each building. The load 201 can receive power supply from the second electric wire 302 through a power receiving facility (not illustrated) provided in the building.

The calculation unit 203 measures the power consumption of the load 201 using a sensor or the like (not illustrated), or estimates the power consumption from the measurement results by a plurality of sensors and the power information measured by the power receiving facility and the second power conversion unit 202, so as to calculate the power consumption of the load 201. For example, in a case where the power consumption of the load 201 transmitted by the calculation unit 203 exceeds the power supply amount from the second electric wire 302 assumed in advance, it is necessary to compensate for the insufficient power from the power supply facility 100. Therefore, the calculation unit 203 transmits information on the calculated power consumption of the load 201 (hereinafter, referred to as desired power use amount information) to the control unit 103. The information on the power consumption may be, for example, the power consumption itself of the load 201 or the desired power use amount. Further, the calculation unit 203 may transmit information on the power consumption of the load 201 to the control unit 103 in a case where the power consumption of the load exceeds a preset amount of power.

The control unit 103 controls the first power conversion unit 102 based on the information on the power consumption of the load 201 calculated by the calculation unit 203 and the available power supply amount of the power supply unit 101, and controls the power supply to the first electric wire 301. The control unit 103 acquires information about the power consumption of the load 201 from the second power conversion unit 202 and acquires information about the available power supply amount from the power supply unit 101. The available power supply amount information can be calculated from, for example, wind conditions and/or sunlight.

The control unit 103 compares the desired power use amount information and the available power supply amount information, determines the provision if the available power supply amount is equal to or more than the desired power use amount, and controls the first power conversion unit 102. At this time, it is more preferable that the control unit 103 determines whether the provision is possible in consideration of the conversion loss of the first power conversion unit 102 and the power transmission loss of the first electric wire 301. For this purpose, it is more preferable that information on the location where the load 201 is installed and information such as the conversion efficiency of the second power conversion unit 202 can be obtained, because the loss can be accurately calculated. In a case where the available power supply amount is less than the desired power use amount, it is determined not to provide or to partially provide the power, and the power conversion unit is controlled. The determination result is preferably provided to the calculation unit 203 in order to prevent an unexpected power shortage in the load 201.

In the power management system according to the first embodiment, each site of the power consumption facility 200 and the power supply facility 100 is also connected to a feeder line, so that a plurality of power supply paths can be provided. In addition, since power can be exchanged between sites using the feeder lines, power consumption of the entire site can be optimized. Further, since power can be supplied from the power supply facility 100 to the feeder line, power outages of a railway operation system can be suppressed. As a result, the reliability of the railway operation system can be improved.

### [Second Embodiment]

Hereinafter, the description of the same configuration as that of the first embodiment will be omitted.

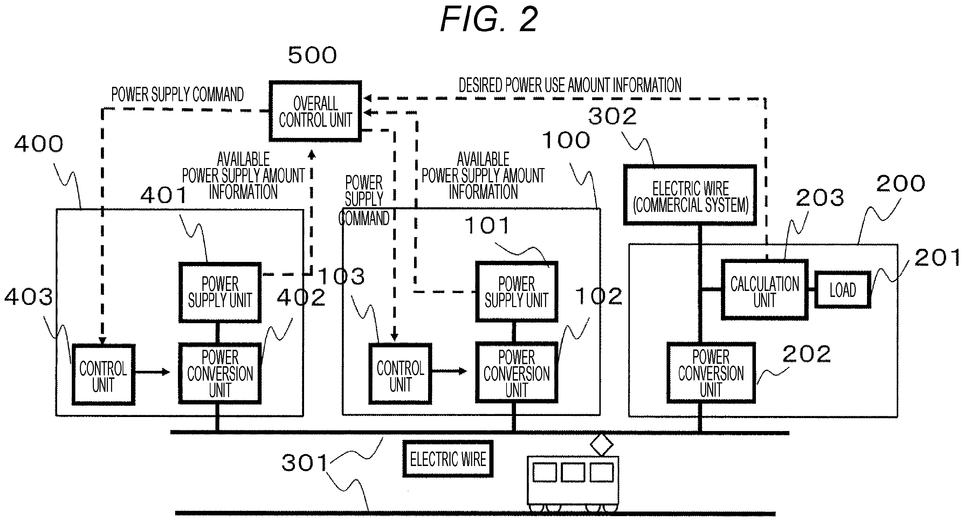

FIG. 2 illustrates a configuration diagram of a power management system according to a second embodiment. The second embodiment includes a plurality of power supply facilities. The power management system includes a first power supply facility 100, a power consumption facility 200, a second power supply facility 400, an overall control unit 500, a first electric wire 301 that transmits power from the power supply facility to the power consumption facility, and a second electric wire 302 for supplying power to the power consumption facility.

The first power supply facility 100 and the second power supply facility 400 have the same configuration as the power supply facility according to the first embodiment. The first power supply facility includes a first power supply unit 101, a first power conversion unit 102 that sets the power supplied from the first power supply unit 100 to be supplied to the first electric wire 301, and appropriately supplies the power, and a first control unit 103 that controls the one power conversion unit 102. The second power supply facility 400 includes a second power supply unit 401, a third power supply unit 402 that sets the power supplied from the second power supply unit 401 to be supplied to the first electric wire 301, and appropriately supplies the power to the first electric wire 301, and a second control unit 403 that controls the third power conversion unit 402. The first power supply unit and the second power supply unit transmit the available power supply amount information to the overall control unit 500.

The power consumption facility, like the power consumption facility 200 according to the first embodiment, connects the load 201, the calculation unit 203 that calculates the power consumption of the load, and the second power conversion unit 202 which connects the power consumption facility 200 and the first electric wire 301, and converts the power into a state to be supplied to one or both of them.

The calculation unit 203 transmits information on the power consumption of the load (desired power use amount information) to the overall control unit 500, as in the first embodiment.

The overall control unit 500 controls the first control unit 103 and the second control unit 403, and supplies the power to the power consumption facility 200 through the first electric wire 301 from the first power supply facility 100 or the second power supply facility 400 based on the available power supply information of the first power supply unit 101, the available power supply amount information of the second power supply unit 401, and the desired power use amount information. Specifically, the overall control unit 500 transmits a power supply command to the first control unit 103 and the second control unit 403 so that an available power supply amount equal to or more than the desired power use amount can be secured. At this time, it is preferable to take into consideration the power transmission path from each power supply facility to the power consumption facility in addition to the available power supply amount information and to prioritize the supply from a nearby site to reduce power transmission loss. In a case where there are a plurality of power supply facilities, it becomes easy to secure an available power supply amount.

Although the power management system including a plurality of power supply facilities has been described in the second embodiment, the power management system may include a plurality of power consumption facilities. In a case where there are a plurality of loads, by integrating a plurality of pieces of desired power use amount information, it becomes possible to approach the available power supply amount, and the amount of renewable energy can be increased. Therefore, it is possible to contribute to a reduction in carbon dioxide emission.

In the case of a power management system including a plurality of power supply facilities or a plurality of loads, it is more preferable to determine the power supply in consideration of the power transmission path based on mutual positional information of the power supply facilities and the loads.

### [Third Embodiment]

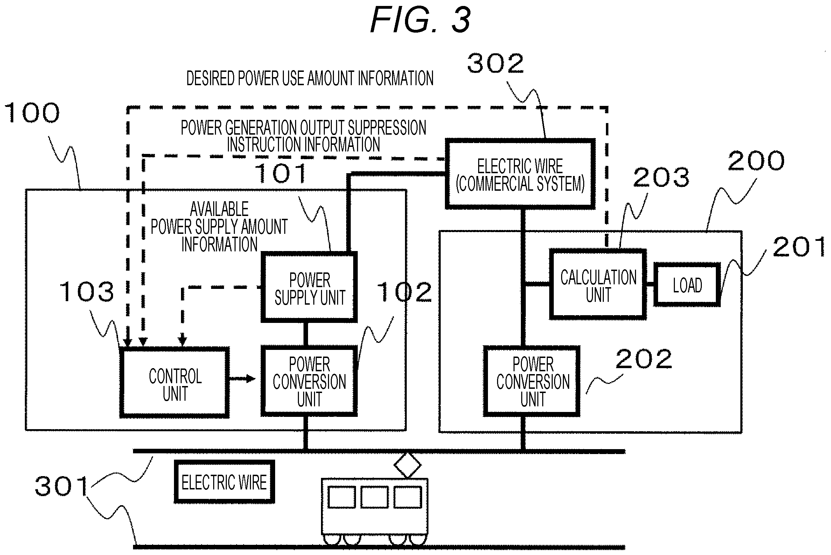

FIG. 3 illustrates a configuration diagram of a power management system according to a third embodiment. In the power management system according to the third embodiment, the power supply unit 101 and the second electric wire 302 are connected via a power conversion device (not illustrated). The power supply unit 101 receives power from the second electric wire 302 and supplies at least a part of the received power to the first electric wire 301. The third embodiment corresponds to a case where the power supply unit is a renewable energy power generation and sells the power using a feed-in tariff or the like. At this time, if the amount of renewable energy generated in the second power grid becomes excessive, the system may become unstable, and a power generation output suppression instruction may be issued to suppress renewable energy generation. In a case where the power generation output suppression instruction is, for example, a content that makes the power supply amount to the second electric wire 302 equal to or less than the instruction value, the difference between the available power supply amount information and the instruction value is transmitted to the first electric wire 301 through the power conversion unit 102 to maximize the power generation of the renewable energy power, which can contribute to the reduction of carbon dioxide emissions.

The power management system according to the third embodiment may include a plurality of power supply facilities or loads as in the second embodiment. Even in the case where the second electric wire is not able to receive power supply from the power supply unit due to a power failure or the like, the third embodiment is preferable because renewable energy power generation can be continued by using the first electric wire. Further, the load 201 can utilize the power supply via the first electric wire as an emergency power supply.

### [Fourth Embodiment]

In a fourth embodiment, a case will be described in which the power supply unit 101 is a power storage system. As a power storage device used in the power storage system, a battery such as a lithium ion battery, a lead battery, a NAS battery, and a redox flow battery, a capacitor such as an electric double layer capacitor or a lithium ion capacitor, or a power storage device using pumped storage power generation can be applied.

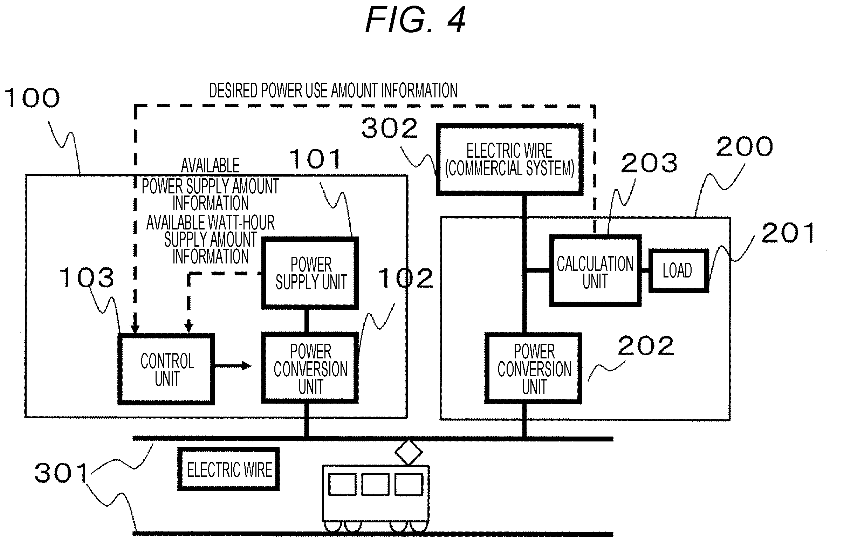

FIG. 4 illustrates a configuration diagram of a power management system according to the fourth embodiment. The power supply unit 101, which is a power storage system, can transmit to the control unit 103, in addition to the available power supply amount information, available watt-hour supply amount information representing the amount of power that can be supplied from the energy amount stored in the power storage device. In a case where it is predicted from the trend of the load power consumption that the desire to use power is continued, power supply can be reliably continued without being affected by changes in weather or the like.

In the fourth embodiment, since the power storage system can supply power to both the electric vehicle and the power consumption facility via the first electric wire, the operation rate of the power storage system is improved, and the power storage system can be effectively used.

### [Fifth Embodiment]

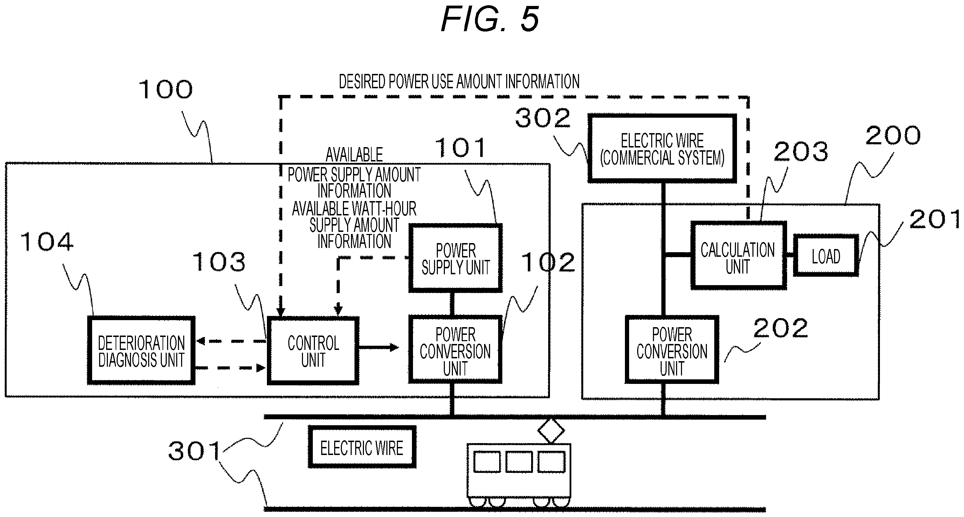

FIG. 5 illustrates a configuration diagram of a power management system according to a fifth embodiment. The fifth embodiment has a configuration in which a deterioration diagnosis unit 104 for diagnosing deterioration of a storage battery system is added to the power management system according to the fourth embodiment. The deterioration diagnosis unit 104 collects, for example, information such as the voltage, current, temperature, and charge state of the power storage system via the control unit 103, and diagnoses the deterioration state from the collected information. The deterioration diagnosis result is transmitted to the control unit 103 and used for controlling the power conversion unit 102.

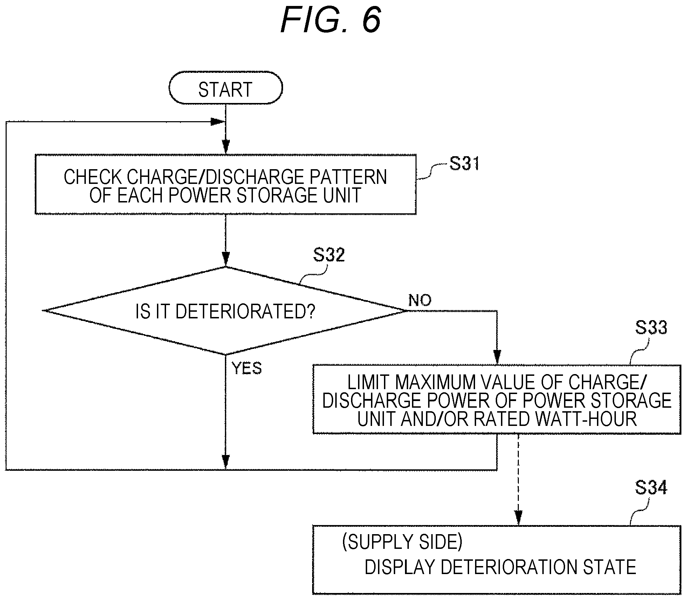

FIG. 6 is a flowchart illustrating an example of the flow of processing in the deterioration diagnosis unit. The deterioration diagnosis unit 104 confirms the charging/discharging behavior of the power storage system provided in each facility (Step S31). At this time, the deterioration diagnosis unit 104 acquires information necessary for the deterioration diagnosis, such as the voltage, current, temperature, and charge state of the power storage unit. The deterioration diagnosis unit 104 may give an instruction in a charge/discharge pattern suitable for the deterioration diagnosis. By giving such an instruction, the accuracy of the deterioration diagnosis can be improved.

Based on the information confirmed in Step S31, the deterioration diagnosis unit 104 determines whether there is any deterioration (Step S32). When it is determined that there is no deterioration (YES in Step S32), the deterioration diagnosis unit 104 returns to the confirmation processing in Step S31.

When it is determined in Step S32 that the power storage unit has deteriorated (NO in Step S32), the deterioration diagnosis unit 104 limits the maximum values of the charging power and the discharging power of the corresponding power storage unit based on a deterioration state (Step S33). The procedure returns to the confirmation processing of Step S31.

When the process of limiting the deteriorated power storage unit is performed in Step S33, the deterioration diagnosis unit 104 may send information on the deterioration state to a deterioration state display unit (not illustrated) of the deteriorated power storage system (Step S34). As a display of the deterioration state on the deterioration state display unit, for example, the degree to which the capacity has decreased due to deterioration is displayed. In addition, the available power supply amount and/or the available watt-hour supply amount may be limited based on the diagnosis result of the deterioration diagnosis unit.

### [Sixth Embodiment]

In a sixth embodiment, the power supply unit 101 does not include renewable energy power generation or a power storage system, and may use the function of supplying power from the second electric wire 302 as a power supply unit. At this time, the power supply unit 101 determines the difference between the power that can be supplied from the second electric wire 302 and the power consumption inside the power supply facility 100 as the available power supply amount. According to such a configuration, power can be supplied from the second electric wire 302 to the first electric wire 301 even in a case where a mechanism that receives power supply from the second electric wire and/or the power generation facility fails in a portion not illustrated. Therefore, the reliability of power supply of the first electric wire can be improved.

Further, it should be noted that the system configuration described in the above embodiment is an example, and the invention is not limited to the configuration illustrated in each drawing. For example, the system configuration illustrated in the drawings is an example, and the numbers of power supply facilities and power consumption facilities are not limited to the example illustrated in the drawings.

### Reference Signs List

- 100: power supply facility
- 101: power supply unit
- 102: first power conversion unit
- 103: control unit
- 104: deterioration diagnosis unit
- 200: power consumption facility
- 201: load
- 202: second power conversion unit
- 203: calculation unit
- 301: first electric wire
- 302: second electric wire
- 400: second power supply facility
- 401: second power supply unit
- 402: third power conversion unit
- 403: second control unit
- 500: overall control unit

## Claims

1. A power management system, comprising:
a power supply unit that is arranged in a power supply facility;
a first electric wire that is used to supply power to an overhead wire in contact with an electric vehicle;
a first power conversion unit that can supply power supplied from the power supply unit to the first electric wire;
a load that is disposed in a power consumption facility;
a second electric wire that is used to supply power to the load;
a calculation unit that calculates power consumption of the load;
a second power conversion unit that connects the first electric wire and the power consumption facility and can supply power in one or both directions; and
a control unit that controls the first power conversion unit based on the power consumption of the load calculated by the calculation unit and an available power supply amount of the power supply unit, and controls power supply to the first electric wire.

2. The power management system according to claim 1,
wherein the power supply unit is any one of a renewable energy power generation system, a power storage system, a power generation device, and the second electric wire.

3. The power management system according to claim 1,
wherein the calculation unit measures the power consumption of the load or estimates the power consumption of the load from measurement results obtained by a plurality of sensors.

4. The power management system according to claim 2,
wherein the calculation unit measures the power consumption of the load or estimates the power consumption of the load from measurement results obtained by a plurality of sensors.

5. The power management system according to any one of claims 1 to 4,
wherein at least one of the power supply facility and the power consumption facility is provided as at least one of a plurality of power supply facilities and a plurality of power consumption facilities.

6. The power management system according to any one of claims 1 to 4,
wherein the power supply unit and the second electric wire are connected via the second power conversion unit, and
wherein the power supply unit receives power from the second electric wire and supplies at least a part of the received power to the first electric wire.

7. The power management system according to claim 5,
wherein the power supply unit and the second electric wire are connected via the second power conversion unit, and
wherein the power supply unit receives power from the second electric wire and supplies at least a part of the received power to the first electric wire.

8. The power management system according to any one of claims 1 to 4,
wherein the power supply unit is a power storage system, and transmits an available power supply amount and an available watt-hour supply amount to the control unit, and
wherein the control unit controls the first power conversion unit based on the power consumption of the load calculated by the calculation unit, the available power supply amount, and the available watt-hour supply amount.

9. The power management system according to claim 5,
wherein the power supply unit is a power storage system, and transmits an available power supply amount and an available watt-hour supply amount to the control unit, and
wherein the control unit controls the first power conversion unit based on the power consumption of the load calculated by the calculation unit, the available power supply amount, and the available watt-hour supply amount.

10. The power management system according to claim 6,
wherein the power supply unit is a power storage system, and transmits an available power supply amount and an available watt-hour supply amount to the control unit, and
wherein the control unit controls the first power conversion unit based on the power consumption of the load calculated by the calculation unit, the available power supply amount, and the available watt-hour supply amount.

11. The power management system according to any one of claims 1 to 4,
wherein the power supply unit is a power storage system, and
the power management system, further comprising:
a deterioration diagnosis unit that diagnoses deterioration of the power storage system.

12. The power management system according to claim 5,
wherein the power supply unit is a power storage system,
the power management system, further comprising:
a deterioration diagnosis unit that diagnoses deterioration of the power storage system.

13. The power management system according to claim 6,
wherein the power supply unit is a power storage system,
the power management system, further comprising:
a deterioration diagnosis unit that diagnoses deterioration of the power storage system.

14. The power management system according to claim 7,
wherein the power supply unit is a power storage system,
the power management system, further comprising:
a deterioration diagnosis unit that diagnoses deterioration of the power storage system.

15. The power management system according to claim 8,
wherein the power supply unit is a power storage system,
the power management system, further comprising:
a deterioration diagnosis unit that diagnoses deterioration of the power storage system.

16. The power management system according to claim 9,
wherein the power supply unit is a power storage system,
the power management system, further comprising:
a deterioration diagnosis unit that diagnoses deterioration of the power storage system.

17. The power management system according to claim 10,
wherein the power supply unit is a power storage system,
the power management system, further comprising:
a deterioration diagnosis unit that diagnoses deterioration of the power storage system.
